# EUROPEAN PATENT SPECIFICATION

(11) **EP 1 853 111 B1**
(45) Date of publication and mention of the grant of the patent: **13.01.2010**
(21) Application number: 05823216.6
(22) Date of filing: 04.11.2005
(51) Int. Cl.: A01N 25/00, A01N 51/00, A01N 47/40, A01N 43/40

(54) **FLY GEL BAIT**
GELKÖDER FÜR FLIEGEN
GEL-PIEGE A MOUCHES

(30) Priority: 13.11.2004 DE 102004054960
(43) Date of publication of application: 14.11.2007
(73) Proprietor: Bayer CropScience AG, 40789 Monheim (DE)
(72) Inventor: HUCHET, Guillaume, Lawrence, KS 66049 (US); NENTWIG, Gunther, 51381 Leverkusen (DE); GUTSMANN, Volker, 40674 Langenfeld (DE); POSPISCHIL, Reiner, 50129 Bergheim (DE); JUNKERSDORF, Jurgen, 51371 Leverkusen (DE); HORN, Karin, 42697 Solingen (DE); ROYALTY, Reed, N., Cary, NC 27513 (US)
(86) International application number: PCT/US2005/039974
(87) International publication number: WO 2006/055275

(56) References cited:
- WO-A-00/28824
- WO-A-01/20983
- WO-A-97/11602
- WO-A-99/22595
- WO-A-2005/015993
- US-A1- 2004 253 288

## Description

### Field of the Invention

The invention relates to baits for controlling harmful insects. The invention further relates to the use of such baits, to methods of preparing such baits and to methods for controlling harmful insects.

### Background of the Invention

Several methods for controlling insects are known. Among them, the use of baits is well known in the art. Such baits are placed where the adult insect population is most likely to settle. Baits may be provided in form of Granules. However granules can only be supplied to horizontal structure, it is impossible to provide them to vertical structures. Baits may also be provided as liquid formulations, also called "paint on" formulations. Such liquids are supplied to the consumer as a concentrate. The consumer has to prepare a dilute followed by spraying/painting for a proper use.

WO97/11602 describes baits for controlling insects consisting of a hydration-gellable basic substance and an active ingredient selected from the group of 1-arylpyrazoles.

Further, WO 91/07972 describes baits for controlling insects consisting of carrageenan as gelling agent and specific insecticides.

It is an aim of the present invention, to provide improved baits for controlling harmful insects, in particular flies. It is a further aim of the present invention, to provide a bait formulation having a quick action. It is a further aim of the present invention, to provide a bait formulation which is ready-to-use. It is a further aim of the present invention, to provide a bait formulation which can be applied on vertical structures and / or overhead. It is a further aim of the present invention, to provide a bait formulation which remains attractive for target insects over a long period.

### Summary of the Invention

The invention relates to baits which can be used for controlling flies, and which comprise an agent that gels upon hydration and one or more active ingredients selected from the group of neonicotinoids.

We have found that gels, made from active ingredients, gelling agents and food attracts, and having a Brookfield yield value between 150 and 1000 and a Brookfield viscosity between 40,000 and 150,000 mPa.s entices adult flies to ingest a lethal dose of insecticide. This gel is prepared as a ready-to-use product. Because of its physico-chemical properties as described above the gel can be used on vertical structures or overhead without drip or running down.

### Description of Specific Embodiments

Unless otherwise stated, the following definitions shall apply and percentages in the present description are by weight.

**Gels** are colloids in which the disperse phase has combined with the continous phase to produce a jellylike product, having the following properties: a Brookfield viscosity (20 rpm at 25°C, spindle #7) higher than 20,000 mPa.s and a Brookfield Yield point higher than 50. A fly gel according to the invention is a gel-type bait capable for controlling insects.

**Active ingredients** are compounds selected from the class of neonicotinoids. The neonicotinoids are known compounds e.g. from the following publications: European Published Specifications Nos. 464 830, 428 941, 425 978, 386 565, 383 091, 375 907, 364 844, 315 826, 259 738, 254 859, 235 725, 212 600, 192 060, 163 855, 154 178, 136 636, 136 686, 303 570, 302 833, 306 696, 189 972, 455 000, 135 956, 471 372, 302 389, 428 941, 376 279, 493 369, 580 553, 649 845, 685477, 483 055, 580553 192 606, 580 533, 2-376 279, 2-235 725; German Offenlegungsschriften Nos. 3 639 877, 3 712 307; Japanese Published Specifications Nos. 03 220 176, 02 207 083, 63 307 857, 63 287 764, 03 246 283, 04 9371, 03 279 359, 03 255 072, 05 178 833, 07 173 157, 08 291 171; US Patents Nos. 5 034 524, 4 948 798, 4 918 086, 5 039 686, 5 034 404, 5 532 365, 4 849 432; PCT Applications Nos. W091/17 659, 91/4965; French Application No. 2 611 114; Brazilian Application No 88 03 621. All the generic formulae and definitions described in these publications, and also the individual compounds described therein, are expressly incorporated herein by reference.

Some of the neonictinoids are summarized under the term nitromethylenes, nitroimines or related compounds. The compounds of formula (I) will be referred to as neonicotinoyles within the scope of the present invention.

Neonicotinoids are represented by the formula (I), 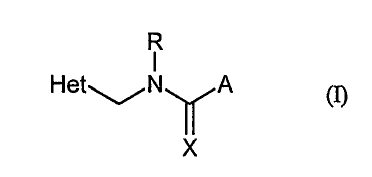 wherein
- Het: represents a heterocycle selected from the group consisting of : 2-Chlorpyrid-5-yl, 2- Methylpyrid-5-yl, 1-Oxido-3-pyridinio, 2-Chlor-1-oxido-5-pyridinio, 2,3-dichlor-1-oxido- 5-pyridinio, Tetrahydrofuran-3-yl, 5-Methyl-tetrahydrofuran-3-yl, 2-Chlorothiazol-5-yl,
- A: represents -N(R¹)(R²) or S(R²), wherein R¹ represents hydrogen, C₁-C₆-alkyl, phenyl-C₁-C₄-alkyl, C₃-C₆-cycloalkyl, C₂-C₆- alkenyl or C₂-C₆-alkinyl and R² represents C₁-C₆-alkyl, C₂-C₆-alkenyl, C₂-C₆-alkinyl, -C(=O)-CH₃ or benzyl,
- R: represents C₁-C₆-alkyl, C₂-C₆-alkenyl, C₂-C₆-alkinyl, -C(=O)-CH₃ or benzyl or
- R: represents together with R² one of the following groupings: -CH₂-CH₂-, -CH₂-CH₂-CH₂-, -CH₂-O-CH₂-, -CH₂-S-CH₂-, -CH₂-NH-CH₂-, -CH₂-N(CH₃)-CH₂- and
- X: represents N-NO₂, N-CN or CH-NO₂.

The following compounds of formula (I) are specific examples:

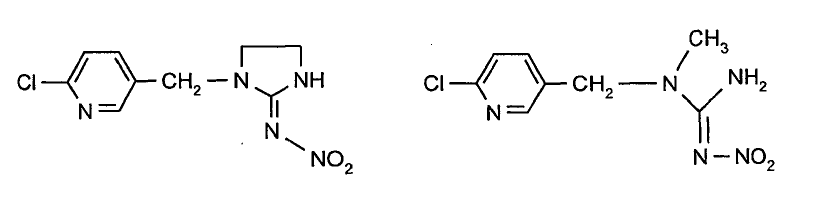

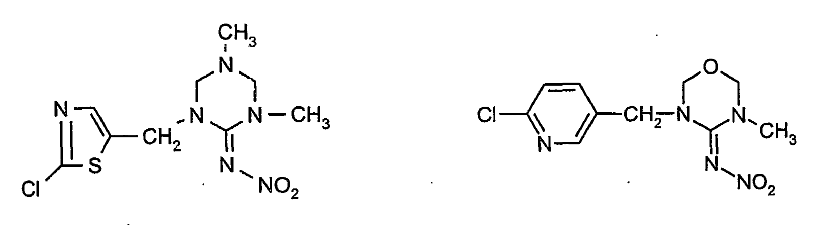

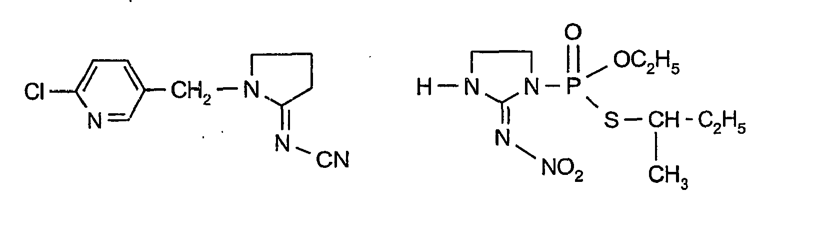

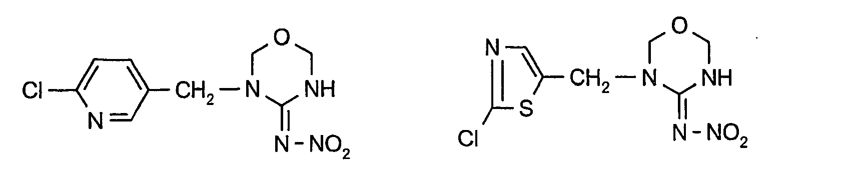

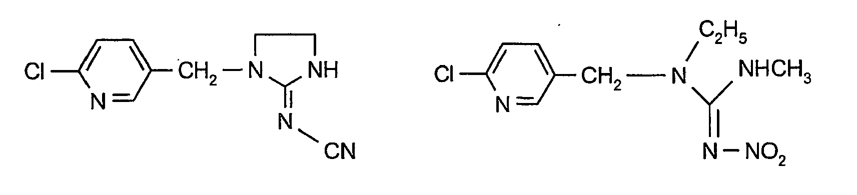

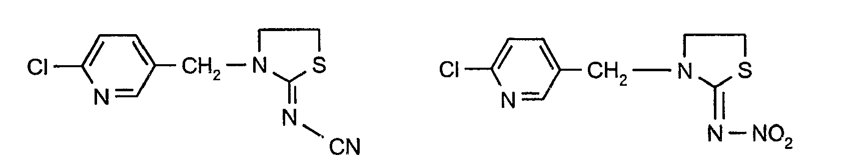

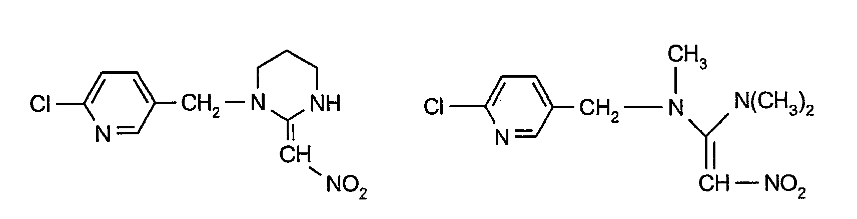

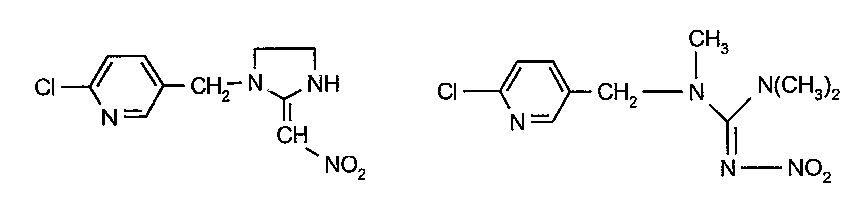

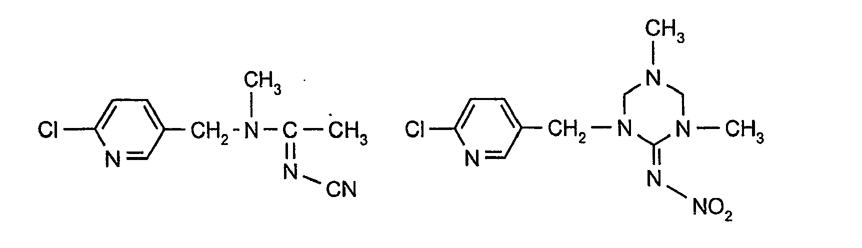

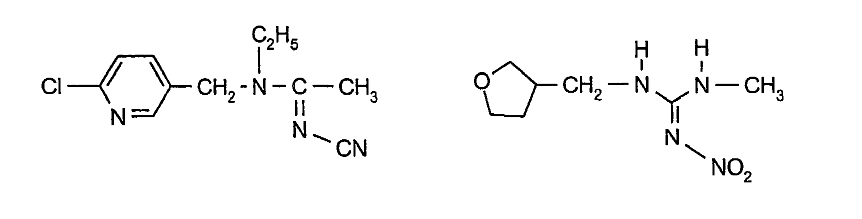

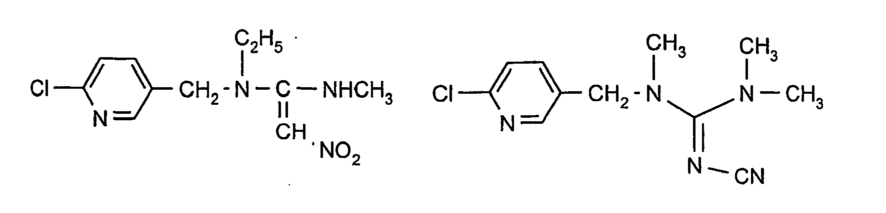

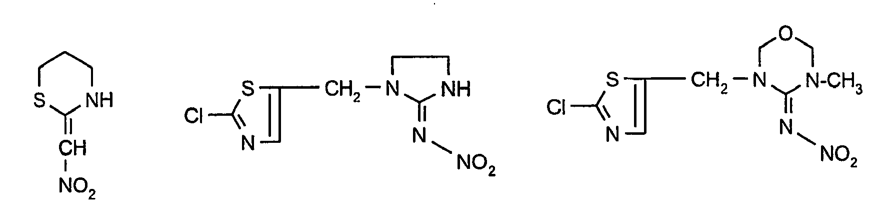

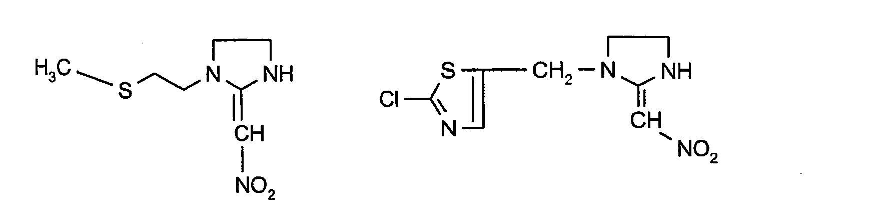

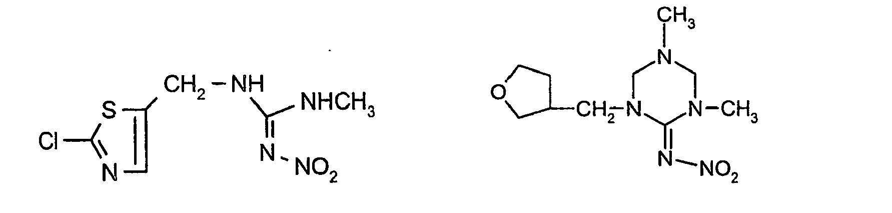

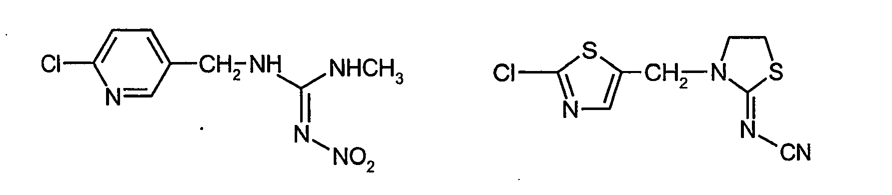

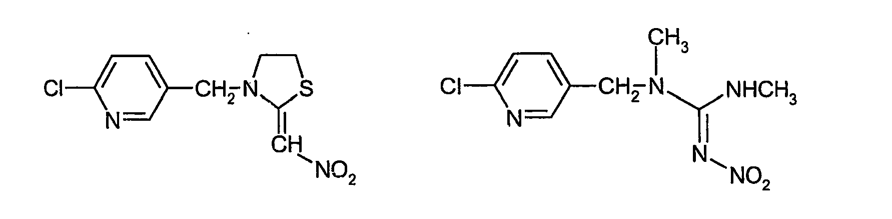

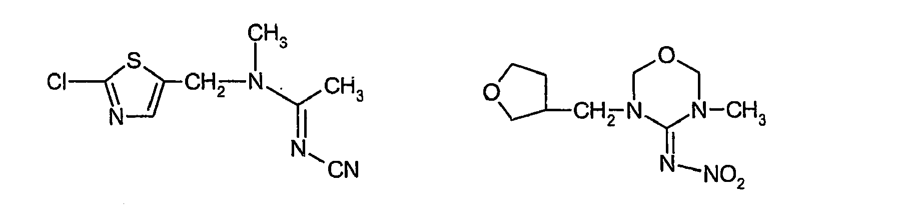

Particularly preferred neonicotinoids are the following compounds:
Thiamethoxam, having the formula 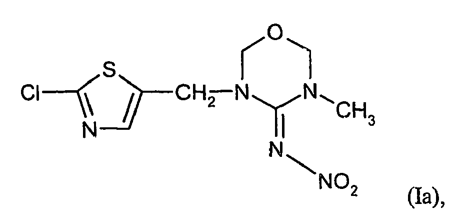 being known from EP A2 0 580 553.
Clothianidin, having the formula 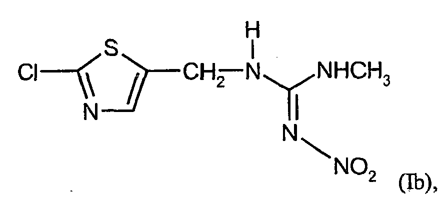 being known from EP A2 0 376 279. Thiacloprid, having the formula 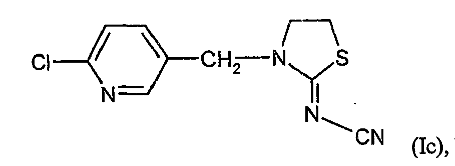 being known from EP A2 0 235 725.#
Dinotefuran, having the formula 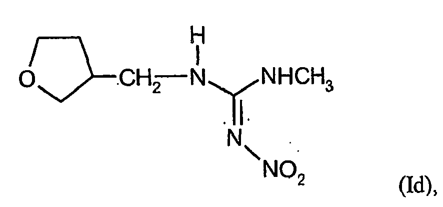 being known from EP A1 0 649 845.
Acetamiprid, having the formula 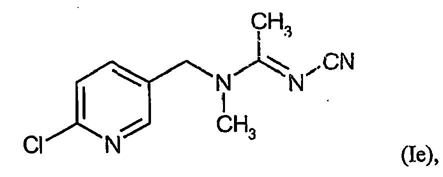 being known from WO A1 91/04965.
Nitenpyram, having the formula 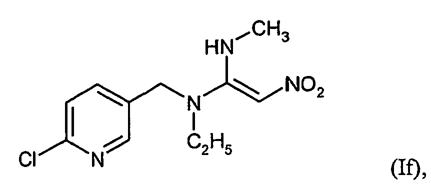 being known from EP A2 0 302 389.
Imidaclopriod, having the formula 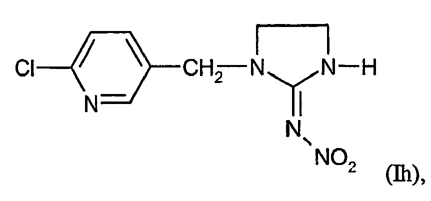 being known from EP 0 192 060.

The most preferred neonicotinoid is imidacloprid.

The compounds of the formula (I) may form tautomers. Accordingly, hereinbefore and hereinafter where appropriate the compound compounds (I) are to be understood to include corresponding tautomers, even if the latter are not specifically mentioned in each case.

The compounds of the formula (I) are capable of forming acid addition salts. Those salts are formed, for example, with strong inorganic acids, such as mineral acids, for example perchloric acid, sulfuric acid, nitric acid, nitrous acid, a phosphoric acid or a hydrohalic acid, with strong organic carboxylic acids, such as unsubstituted or substituted, for example halo-substituted, C₁-C₄-alkanecarboxylic acids, for example acetic acid, saturated or unsaturated dicarboxylic acids, for example oxalic, malonic, succinic, maleic, fumaric or phthalic acid, hydroxycarboxylic acids, for example ascorbic, lactic, malic, tartaric or citric acid, or benzoic acid, or with organic sulfonic acids, such as unsubstituted or substituted, for example halo-substituted, C₁-C₄-alkane- or arylsulfonic acids, for example methane- or p-toluene-sulfonic acid. Furthermore, compounds of formula (I) having at least one acidic group are capable of forming salts with bases.

Suitable salts with bases are, for example, metal salts, such as alkali metal or alkaline earth metal salts, for example sodium, potassium or magnesium salts, or salts with ammonia or an organic amine, such as morpholine, piperidine, pyrrolidine, a mono-, di- or tri-lower alkylamine, for example ethyl-, diethyl-, triethyl- or dimethyl-propyl-amine, or a mono-, di- or tri-hydroxy-lower alkylamine, for example mono-, di- or tri-ethanolamine.

In addition, corresponding internal salts may also be formed. Preference is given within the scope of the invention to agrochemically advantageous salts.

In view of the close relationship between the compounds of formula (I) in free form and in the form of their salts, any reference hereinbefore or hereinafter to the free compounds of formula (I) or to their respective salts is to be understood as including also the corresponding salts or the free compounds of formula (I), where appropriate and expedient. The same applies in the case of tautomers of compounds of formula (I) and the salts thereof. The free form is generally preferred in each case.

**Gelling agents** are any of a variety of hydrophilic substances used to form a gel by increasing the viscosity and yield point of liquid mixtures. The following maybe mentioned by way of example as gelling agent according to the invention: starches, gellan gum, carrageenan gum, agar agar, casein, gelatin, carob gum, xanthan gum, jelutong gum, polysaccharide gums, phycocolloids, polyacrylate polymer, semisynthetic cellulose derivatives (carboxymethyl-cellulose, etc.), polyvinyl alcohol, carboxy-vinylates, bentonites, silicates and colloidal silica. These gelling agents can be used alone or as a mixture of two or more in any ratio. Preferred gelling agents are xanthan gums and polyacrylate polymers. Particularly preferred gelling agents are Rhodopol G and Carbopol EZ-2.

**Attractants** are inert ingredients that act in one or several of the following ways: a) entice the insect to approach the bait, entice the insect to touch the bait, entice the insect to consume the bait, entice the insect to return to the bait. Inert ingredients that are able to achieve these goals belong to the group of food attractants and non-food attractants. The following may be mentioned by way of example as food attractants: water, cereal powders such as wheat powder, maize powder, malt powder, rice powder, rice bran and the like, starches such as potato starch, maize starch and the like, sugars such as sucrose, maltose, arabinose, galactose, lactose, sorbitose, glucose, fructose, sorbitol, corn syrup, maple syrup, coca cola syrup, invert sugars (Invertix), molasses, honey and the like, and glycerol and the like. Proteins such as meat, meat extracts, meat flavours and milk powder, fish meal, fish extracts or fish flavour, sea food, sea food extracts or sea food flavour, yeast, yeast extract and yeast flavour and the like. Fruits such as apple, apricot, banana, blackberry, cherry, currant, gooseberry, grapefruit, raspberry, strawberry (pure, syrup or extract). Fats and oils such as vegetable oils from e.g. corn, olive, caraway, peanut, sesame oil, soy bean, sunflower, animal derived fats and fish derived oils and the like. These baiting substances can be used alone or as a mixture of two or more in any ratio. Preferred baiting substances are water, sugars and proteins. Particularly preferred baiting substances are water, sucrose and fish flavour. The following may be mentioned by way of example as non-food attractants: Alcohols such as benzyl alcohol, butanol, decanol, ethanol, glycerin, hexanol and isobutanol. Pheromones such as (Z)-9-Tricosene ("muscalure"), LEJ 179 (which is a mixture of n-butyric acid, muscalure and at least one component selected from the group consisting of caprylic acid, laurylic acid and diacetyle (CH3-CO-CO-CH3)) and Heneicosene. Attractants which further may be mentioned by way of example are fatty acids such as caprylic acid, caproic acid, capric acid, lauric acid, oleic acid and the like, higher alcohols such as octyl alcohol, dodecyl alcohol, oleyl alcohol and the like, and natural and artificial flavours such as onion flavour, milk flavour, butter flavour, cheese flavour and the like. These attractants can be used alone or as a mixture of two or more in any ratio. Preferred non-food attractants are alcohol, pheromones and flavours. Particularly preferred attractants are sorbitol, (Z)-9-Tricosene and LEJ179.

The baits according to the present invention may comprise, further adjuvants, e. g. one or more stabilizer, one or more repellent for those species which one does not want to ingest the baits, one or more colorant, one or more antiseptic and the like. It is further understood that some compounds of the baits according to the present invention may have more than one function, e.g. water may act as an attractant and a diluent at the same time

**Stabilizers** which may be mentioned are, for example, a calcium salt such as calcium lactate, calcium chloride and the like.

**Repellents** which may be mentioned are, for example, hot or bitter substances such as Guinea pepper powder, denatonium benzoate and the like. A particularly preferred repellent is denatonium benzoate.

**Colorants** which may be mentioned are, for example, Red No. 2, Red No. 102, Yellow No. 4, Yellow No. 5, caramel, activated carbon and the like. A particularly preferred colorant is activated carbon.

**Antiseptics** which may be mentioned are, for example, sorbic acid, sorbinates, benzoic acid, benzoates, paraoxybenzoic esters, methylisothiazolinone, benzisothiazolinone, chloro methylisothiazolinone and the like. Particularly preferred antiseptics are sorbic acid, sodium benzoate, methylisothiazolinone, benzisothiazolinone and chloro methylisothiazolinone.

The baits according to the present invention generally comprise at least one attractant, at least one gelling agent, at least one neonicotinoid, adjuvants and water. The weight ratio between attractant(s)_{;} gelling agent(s), active ingredient(s), adjuvant(s) and water is preferably between 40-60 : 1-5 : 0,5-2 : 1-5 : 40-60 per cent by weight and particularly preferably between 45-50:1.5-2 :1-1,5 : 2-2,5 :45-50 per cent by weight.

The baits according to the present invention generally have a Brookfield yield value (also called Brookfield yield point) between 150 and 1000.

The baits according to the present invention generally have a Brookfield RVT viscosity between 40,000 and 150,000 mPa.s (20 rpm at 25°C, spindle #7).

The Brookfield yield value and the Brookfield RVT viscosity can for instance be measured according to the operation instructions of the following manual: Brookfield^{®} Digital Rheometer Model DV-III +, operating instructions, Manual Nr. 98-211-A0701 of the manufacture Brookfield Engineering Laboratories, Inc. MA, USA.

Moreover, the baits according to the present invention can comprise other insecticidal active materials in addition to the compound of the general formula (I).

**Insects** belong to the class of Insecta. Preferred insects belong to the order of Diptera, especially to the suborder Cyclorrapha. Preferred insects belong to the suborder Cyclorrapha and the families Calliphoridae (e.g. Lucilia cuprina), Drosophilidae (e.g. Drosophila melanogaster) and Muscidae (e.g. Stomoxys calcitrans, Musca domestica). Particular preferred insects belong to the family Muscidae and to the family of Drosophilidae. Particularily preferred specific insects are Musca domestica and Drosphila melanogaster.

This invention also relates to a **process for the preparation** of baits which comprises making a liquid composition comprising gelling agent, water and a compound of general formula (I) and then solidifying the liquid composition to produce a gel. The hydrated gelling agent can be prepared, for example, by mixing a gelling agent and water, and solidifying it upon neutralization.

The baits according to the present invention can be **used** for controlling various insects by placing them in locations where the harmful insects live, or through which they pass, either in the form of baits alone or by placing them into suitable containers. Preferably, the baits are applied in life stock keeping facilities such as stables, pens or the like. Additionally, the baits may also be applied in areas where insects accumulate/reproduce such as rubbish bins, garbage dumpsters, refuse areas and land fill sites. In a preferred embodiment, the baits are applied to vertical structures, such as walls, pillars, posts, feeding containers and boxes. In an other preferred embodiment, the baits are applied onto targets such as cardboard or wooden sheets or the like to be hung up or placed in areas where insects accumulate. In an other preferred embodiment, the baits are applied in combination with conventional insect control products.

Even though the rates of application of the baits which can be used for combating harmful insects, for example insects, can vary depending on the target species, the conditions under which they appear and the like, it is still possible to say that the doses of bait to be used are, for example, between 200 and 400 gram per 100 m² stable ground floor area..

The bait according to the invention can be applied onto any surface: The bait can be applied out of a syringe or cartridge, it can be applied by painting with a brush. The gel remains attractive to the insects and remains sticky to any surface for months.

The present invention can be illustrated in greater detail by a few use examples. These examples present the best mode contemplated by the inventor for disclosing the various principles as well as other aspects, advantages and application of the present invention.

### Examples

### a) Formulation Example:

| ***Ingredients*** | ***w*/*w%*** | ***Purpose*** |
|---|---|---|
| Imidacloprid SC 350 | 3.28 | neonicotinoid |
| Rhodopol G | 0.5 | Gelling agent |
| Carbopol EZ-2 | 1.2 | Gelling agent |
| Sorbic acid | 0.2 | antiseptic |
| Sodium Benzoate | 0.1 | antiseptic |
| Sugar | 18.5 | attractant |
| Fish Flavour QL23725 | 5.0 | attractant |
| Muscalure | 0.5 | attractant |
| Bitrex VM 5 | 0.1 | Bittering agent |
| Activated Carbon | 0.2 | Colouring agent |
| Sodium Hydroxyde sol. (10%) | 8.125 | Carbopol activator |
| Sorbitol sol. (70%) | 34.215 | Diluent / Humectant / attractant |
| Water | 28.08 | Diluent / attractant |

### b) Application Example:

The gel can be applied onto any surface directly out of the original packaging or can be squeezed into a container for further dispensing. The preferred application method is to brush the gel onto structures where the target insect rest and feed. Immediately after application, the gel is attractive to the target insects which will approach the bait and settle to feed. Typically, insects will start to die after several minutes after uptake of the bait. The gel remains attractive to the insects and effective to kill insects for months although the gel will dry out to a certain degree and becomes dry to the touch. The colour of the gel remains unchanged during the aging process.

### c) Biological Example: Attractants and feeding stimulants for fly gel

Biological examples which demonstrate the advantage of an Imidacloprid containing fly gel in comparison to a Fipronil containing fly gel: Tests in 0.5 m³ fly chambers (mean of three replicates)

| | **% knock down after** | | | **% Mortality** | **KT 50** |
|---|---|---|---|---|---|
| **Formulation** | **30'** | **60'** | **4h** | **after 20h** | **hours** |
| Fly gel with 1.0 % Imidacloprid (optimized conc.) | 37 | 41 | 62 | 85 | 1,6 |
| Fly gel with 0.5 % Fipronil (optimized conc) | 0 | 0 | 32 | 77 | 7,7 |

The Imidacloprid containing gel reveals a shorter KT 50 than the Fipronil containing gel. The time until 50 % of the flies are knocked down is only 1.6 hours compared with 7.7 hours for the Fipronil containing gel.

## Claims

1. Fly gel, comprising
a) one or more neonicotinoids,
b) one or more gelling agents,
c) one or more attractants,
and having a Brookfield yield value between 150 and 1000 and a Brookfield viscosity between 40,000 and 150,000 mPa.s

2. Bait according to claim 1, in which the neonicotinoids are selected from the group consisting of Thiamethoxam, Clothianidin, Thiacloprid, Dinotefuran, Acetamiprid, Nitenpyram and Imidacloprid.

3. Bait according to claim 1, in which the neonicotinoid is Imidacloprid.

4. Bait according to claim 1, in which the gelling agents are selected from the group consisting of Rhodopol and Carbopol.

5. Bait according to claim 1, in which one attractant is muscalure.

6. Bait according to claim 1, which has been shaped.

7. Process for the preparation of a fly gel according to claim 1, which comprises a) preparing a liquid composition comprising one or more gelling agents, water, one or more attractants and one or more neonicotinoids and b) solidifying the liquid composition to form a gel.

8. Use of a fly gel according to claim 1 for controlling harmful insects.

9. Method of controlling flies, **characterized in that** fly gels according to claim 1 are applied to the habitat of flies.

10. Method of controlling flies according to claim 9 **characterized in that** fly gels according to claim 1 are applied to vertical structures which are located in the habitat of flies.

## Patentansprüche

1. Fliegengel, umfassend:
(a) ein oder mehrere Neonicotinoide,
(b) ein oder mehrere Geliermittel,
(c) ein oder mehrere Lockmittel,
und welches einen Brookfield-Dehnungswert zwischen 150 und 1.000 und eine Brookfield-Viskosität zwischen 40.000 und 150.000 mPa•s aufweist.

2. Köder gemäss Anspruch 1, worin die Neonicotinoide aus der Gruppe, bestehend aus Thiamethoxam, Clothianidin, Thiacloprid, Dinotefuran, Acetamiprid, Nitenpyram und Imidacloprid, ausgewählt sind.

3. Köder gemäss Anspruch 1, worin das Neonicotinoid Imidacloprid ist.

4. Köder gemäss Anspruch 1, worin die Geliermittel aus der Gruppe, bestehend aus Rhodopol und Carbopol, ausgewählt sind.

5. Köder gemäss Anspruch 1, worin ein Lockmittel Muscalure ist.

6. Köder gemäss Anspruch 1, der geformt worden ist.

7. Verfahren zur Herstellung eines Fliegengels gemäss Anspruch 1, umfassend (a) Herstellen einer flüssigen Zusammensetzung, die ein oder mehrere Geliermittel, Wasser, ein oder mehrere Lockmittel und ein oder mehrere Neonicotinoide umfasst, und (b) Verfestigen der flüssigen Zusammensetzung zur Bildung eines Gels.

8. Verwendung eines Fliegengels gemäss Anspruch 1 zur Kontrolle schädlicher Insekten.

9. Verfahren zur Kontrolle von Fliegen, **dadurch gekennzeichnet, dass** Fliegengele gemäss Anspruch 1 auf den Habitat von Fliegen angewandt werden.

10. Verfahren zur Kontrolle von Fliegen gemäss Anspruch 9, **dadurch gekennzeichnet, dass** Fliegengele gemäss Anspruch 1 auf senkrechte Strukturen angewandt werden, die im Habitat von Fliegen angeordnet sind.

## Revendications

1. Gel anti-mouches, comprenant
a) un ou plusieurs néonicotinoïdes,
b) un ou plusieurs agents gélifiants,
c) un ou plusieurs attractifs,
et ayant un rendement Brookfield de valeur comprise entre 150 et 1000 et une viscosité Brookfield de valeur comprise entre 40 000 et 150 000 mPa.s.

2. Appât suivant la revendication 1, dans lequel les néonicotinoïdes sont choisis dans le groupe consistant en thiaméthoxam, clothianidine, thiaclopride, dinotéfuran, acétamipride, nitenpyram et imidaclopride.

3. Appât suivant la revendication 1, dans lequel le néonicotinoïde est l'imidaclopride.

4. Appât suivant la revendication 1, dans lequel les agents gélifiants sont choisis dans le groupe consistant en rhodopol et carbopol.

5. Appât suivant la revendication 1, dans lequel l'un des attractifs consiste en muscalure.

6. Appât suivant la revendication 1, qui a été façonné.

7. Procédé de production d'un gel anti-mouches suivant la revendication 1, qui consiste a) à préparer une composition liquide comprenant un ou plusieurs agents gélifiants, de l'eau, un ou plusieurs attractifs et un ou plusieurs néonicotinoïdes et b) à amener la solution liquide à se solidifier pour former un gel.

8. Utilisation d'un gel anti-mouches suivant la revendication 1 pour combattre des insectes nuisibles.

9. Procédé pour combattre des mouches, **caractérisé en ce que** des gels anti-mouches suivant la revendication 1 sont appliqués à l'habitat des mouches.

10. Procédé pour combattre des mouches suivant la revendication 9, **caractérisé en ce que** des gels anti-mouches suivant la revendication 1 sont appliqués à des structures verticales qui sont situées dans l'habitat des mouches.
